Europäisches Patentamt

European Patent Office

Office européen des brevets

(19)

(11) Veröffentlichungsnummer: **0 211 245 B1**

(12) **EUROPÄISCHE PATENTSCHRIFT**

(45) Veröffentlichungstag der Patentschrift: **24.10.90**

(21) Anmeldenummer: **86109136.1**

(22) Anmeldetag: **04.07.86**

(51) Int. Cl.⁵: **H 04 Q 11/04, H 04 Q 3/64, H 04 Q 3/495**

(54) Schaltungsanordnung für Fernmeldevermittlungsanlagen, insbesondere Fernsprechvermittlungsanlagen, mit Koppelfeldern für Ein- und Mehrkanalverbindungen.

(30) Priorität: **09.08.85 DE 3528671**

(43) Veröffentlichungstag der Anmeldung:
**25.02.87 Patentblatt 87/09**

(45) Bekanntmachung des Hinweises auf die Patenterteilung:
**24.10.90 Patentblatt 90/43**

(84) Benannte Vertragsstaaten:
**AT BE CH DE FR GB IT LI NL SE**

(56) Entgegenhaltungen:
EP-A-0 053 267
LU-A- 67 114

PROCEEDINGS OF THE INTERNATIONAL SWITCHING SYMPOSIUM, 7.-11. Mai 1984, "Session" 22b, "Paper" 6, Seiten 1-8, IAC, Florence, IT; J.L. LUTTON et al.: "Traffic performance of multi-slot call routing strategies in an integrated services digital network"

(73) Patentinhaber: **Siemens Aktiengesellschaft**
**Wittelsbacherplatz 2**
**D-8000 München 2 (DE)**

(72) Erfinder: **Grabowski, Karl-Heinz, Dipl.-Ing.**
**Brennerstrasse 35**
**D-8038 Gröbenzell (DE)**

(56) Entgegenhaltungen:

**PROCEEDINGS OF THE INTERNATIONAL TELETRAFFIC CONGRESS, 13.-20. Juni 1973, "Paper" 635, Seiten 1-8, IAC, Stockholm, SE; O. ENOMOTO et al.: "An analysis of mixtures of multiple band-width traffic on time division switching networks"**

**ELECTRONICS AND COMMUNICATIONS IN JAPAN, Band 53-A, Nr. 5, Mai 1970, Seiten 43-52, Tokyo, JP; T. YAMAGUCHI et al.: "An integrated hybrid traffic switching system mixing preemptive wideband and waitable narrowband calls"**

(56) Entgegenhaltungen:

IEEE TRANSACTIONS ON COMMUNICATION TECHNOLOGY, Band 13, Nr. 3, September 1965, Seiten 258-266, New York, US; L.A. GIMPELSON: "Analysis of mixtures of wide- and narrow-band traffic"

## Beschreibung

Die Erfindung betrifft eine Schaltungsanordnung für Fernmeldevermittlungsanlagen, insbesondere Fernsprechvermittlungsanlagen, in denen Verbindungen zwischen zwei Endstellen, zum Beispiel Teilnehmerstellen, als Einkanalverbindungen über je einen Kanal für jede der beiden Übertragungsrichtungen oder als Mehrkanalverbindungen über dementsprechend eine bestimmte Mehrzahl von Kanälen pro Mehrkanalverbindung für jede der beiden Übertragungsrichtungen hergestellt werden, und in denen zur Verbindungsherstellung Bündel von Kanälen in Koppelfeldern jeweils von Koppelstufe zu Koppelstufe verlaufend und gegebenenfalls auch in Übertragungssystemen jeweils von Vermittlungsstelle zu Vermittlungsstelle verlaufend zur freien Auswahl je eines freien Kanales oder — bei Mehrkanalverbindungen von dementsprechend mehreren zugleich auszuwählenden Kanälen — für Wegeauswahl-Sucheinrichtungen in oder von Koppelfeldern und gegebenenfalls Richtungsauswahl-Sucheinrichtungen in Vermittlungsstellen zur Verfügung stehen, und in denen die freien Kanäle jeweils eines Bündels für eine Suche nach und eine Auswahl von einem Kanal für eine Einkanalverbindung für jede ihrer beiden Übertragungsrichtungen nur verfügbar sind, wenn die Anzahl der momentanen freien Kanäle wenigstens so groß wie die bestimmte Mehrzahl von Kanälen für eine Mehrkanalverbindung ist.

Eine Schaltungsanordnung dieser Art ist in der DE—OS 31 22 275 und in den Proceedings of the International Switching Symposium, 7.- 11. Mai 1984, "Sessiou" 22b, "Paper" 6, Seiten 1-8, IAC, Florence, IT. beschrieben. Mehrkanalverbindungen dienen bekanntlich zur Zurverfügungstellung einer größeren Frequenzbandbreite für eine herzustellende Verbindung.

Bezüglich der Wegesuche und Wegeauswahl bei der Verbindungsherstellung sind Mehrkanalverbindungen gegenüber Einkanalverbindungen in der Betriebssituation starker Auslastung der vorhandenen Bündel benachteiligt. Es sei angenommen, daß eine Mehrkanalverbindung mit Hilfe von vier parallelen Kanälen pro Verbindungsabschnitt herzustellen sei. Ferner sei angenommen, daß durch momentane starke Auslastung der Bündel einige gänzlich besetzt sind, und daß bei einem Freiwerden von Kanälen diese immer relativ bald darauf für eine Herstellung weiterer Verbindungen neu belegt werden. In einer solchen Betriebssituation erreicht die Zahl von momentan freien Kanälen nur relativ selten die genannte bestimmte Anzahl von Kanälen, die zur Herstellung einer Mehrkanalverbindung erforderlich ist. In einer solchen Betriebssituation bestehen noch relativ häufig Verbindungs-Chancen für Einkanalverbindungen, jedoch relativ selten Verbindungs-Chancen für Mehrkanalverbindungen. Infolgedessen sind in einer solchen Betriebssituation Mehrkanalverbindungen gegenüber Einkanalverbindungen wesentlich benachteiligt hinsichtlich der Chance einer erfolgreichen Verbindungsherstellung.

Für die Erfindung besteht die Aufgabe, für die Herstellung von Mehrkanalverbindungen die Verlustwahrscheinlichkeit herabzusetzen und der Verlustwahrscheinlichkeit bezüglich der Herstellung von Einkanalverbindungen anzugleichen. Mehrkanalverbindungen und Einkanalverbindungen sollen also die gleiche Herstellungs-Chance bei der Verbindungsherstellung haben.

Die Erfindung löst die gestellte Aufgabe dadurch, daß bei der Herstellung der Herstellung einer Einkanalverbindung die Kanäle eines Bündels für die Sucheinrichtung auch zur Auswahl stehen, wenn nur ein einziger Kanal des betreffenden Bündels frei ist, und daß für den Fall, daß die Anzahl der momentan freien Kanäle so groß wie die bestimmte Mehrzahl von Kanälen für eine Mehrkanalverbindung ist, die Herstellung einer Mehrkanalverbindung Vorrang vor der Herstellung einer Einkanalverbindung hat, insbesondere die freien Kanäle nur zur Herstellung einer Mehrkanalverbindung für die Sucheinrichtung zur Auswahl stehen.

Erfindungsgemäß kann also für eine Einkanalverbindung aus einem Bündel von Kanälen ein freier Kanal immer nur ausgewählt werden, wenn so viele Kanäle in diesem Bündel frei sind, daß auch die Durchschaltung einer Mehrkanalverbindung möglich wäre. Damit haben in jedem Verbindungsabschnitt Mehrkanalverbindungen die gleiche Verbindungsherstellungs-Chance wie Einkanalverbindungen. Sind in einem Bündel alle Kanäle oder fast alle Kanäle besetzt, so müssen erst wieder so viel Kanäle frei werden, wie für eine Mehrkanalverbindung gebraucht werden, bevor überhaupt eine Verbindung, also eine Mehrkanalverbindung oder eine Einkanalverbindung hergestellt werden kann. Erfindungsgemäß ist verhindert, daß neu herzustellende Einkanalverbindungen in der hier angesprochenen Betriebssituation einzelne Kanäle immer wieder "wegschnappen" können, bevor eine zur Herstellung einer Mehrkanalverbindung erforderliche Anzahl von Kanälen durch ein Freiwerden von Kanälen überhaupt zusammenkommen kann.

Gemäß einer Weiterbildung der Erfindung ist vorgesehen, daß bei der Herstellung einer Einkanalverbindung die Kanäle eines Bündels für die Sucheinrichtung auch zur Auswahl stehen wenn nur ein einziger Kanal des betreffenden Bündels frei ist, und daß für den Fall, daß die Anzahl der momentan freien Kanäle so groß wie die bestimmte Mehrzahl von Kanälen für eine Mehrkanalverbindung ist, die Herstellung einer Mehrkanalverbindung Vorrang vor der Herstellung einer Einkanalverbindung hat, insbesondere die freien Kanäle nur zur Herstellung einer Mehrkanalverbindung für die Sucheinrichtung zur Auswahl stehen. Diese Weiterbildung der Erfindung besteht in einer Maßnahme zugunsten der Einkanalverbindungen und einer weiteren Maßnahme zugunsten der Mehrkanalverbindungen, wobei diese beiden Maßnahmen sich hinsichtlich der Inanspruchnahme der freien Kanäle der Bündel etwa die Waage halten; jedoch ergeben sich Vorteile sowohl für die Herstellung von Mehrkanalverbindungen als auch für die Herstellung von Einkanalverbindungen. Sofern sowieso nur ein einziger Kanal frei ist, ist er gemäß dieser Weiterbildung der Erfindung für eine Herstellung einer Einkanalverbindung verfügbar. In einer solchen Betriebssituation besteht sowieso eine relativ niedrige Erfolgs-Chance für die Herstellung einer Mehrkanalverbindung. Dafür wird aber für den Fall, daß in einem Bündel so viele Kanäle frei sind, wie zur Herstellung einer Mehrkanalverbindung erforderlich sind, der Herstellung einer Mehrkanalverbindung der Vorrang eingeräumt gegenüber der Herstellung einer Einkanalverbindung. Dies kann in einfacher Weise dadurch geschehen, daß in dieser besonderen Betriebssituation die Inanspruchnahme eines freien Kanales für die Herstellung einer Einkanalverbindung verhindert ist.

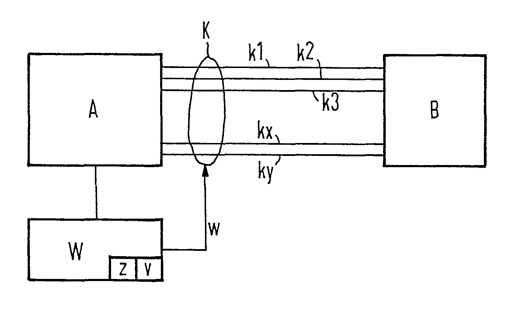

In der Zeichnung ist ein Ausführungsbeispiel der Erfindung nur in wesentlich zu ihrem Verständnis beitragenden Bestandteilen dargestellt, worauf dieselbe jedoch keineswegs beschränkt ist.

Es ist ein Bündel K von Kanälen k1 bis ky vorgesehen, die von einer Schalteinrichtung A zu einer Schalteinrichtung B verlaufen. Bei diesen beiden Schalteinrichtungen kann es sich um zwei Vermittlungsstellen handeln, die über die Kanäle dieses Bündels K miteinander in Verbindung stehen. Die Kanäle des Bündels K können zu einem Übertragungs-System gehören, das als Trägerfrequenz-System, PCM-System und dergleichen ausgebildet sein kann. Die Kanäle des Bündels K sind für die Herstellung von Verbindungen belegbar. Hierzu ist jeder der Kanäle dieses Bündels daraufhin zu prüfen, ob er frei ist. Freie Kanäle stehen für eine Belegung zur Auswahl.

In der Zeichnung ist nur ein Bündel mit Kanälen k1 bis ky dargestellt. Jeder Kanal möge aus einem Kanalpaar bestehen, wobei pro Kanalpaar je ein Kanal für die eine Übertragungsrichtung und je ein Kanal für die andere Übertragungsrichtung vorgesehen ist. Diese Zusammenhänge sind an sich bekannt und geläufig und bedürfen hier deshalb keiner weiteren detaillierten Erläuterung.

Bei den Schalteinrichtungen A und B kann es sich anstatt um Vermittlungsstellen, die durch die Kanäle des Bündels K miteinander in der angegebenen Weise verbunden sind, auch um zwei Koppelstufen innerhalb eines Koppelfeldes handeln. Bei dem Koppelfeld kann es sich um ein Raummultiplexkoppelfeld und/oder um ein Zeitmultiplexkoppelfeld handeln. Bei Zeitmultiplexkoppelfeldern können die Vielfache Raumlagenvielfache, Zeitlagenvielfache sowie Raumlage-Zeitlage-Vielfache sein. Die Vielfache in den aufeinander folgenden Koppelstufen sind über Bündel von Kanälen miteinander verbunden. Um ein solches Bündel von Kanälen kann es sich auch in dem in der Zeichnung dargestellten Bündel K handeln. Demnach wären in diesem Falle die Schalteinrichtungen A und B Vielfache verschiedener Koppelstufen innerhalb eines Koppelfeldes.

Zur Wegesuche und Wegeauswahl innerhalb eines Koppelfeldes sowie unter den an ein Koppelfeld angeschlossenen Leitungen und Verbindungskanälen erfolgt mit Hilfe einer Wegesucheinrichtung. Die in der Zeichnung dargestellte Wegesucheinrichtung W dient also dazu, bei Verbindungsherstellungsaufträgen jeweils einen freien Kanal unter den freien Kanälen zu suchen und auszuwählen und für eine Verbindungsherstellung zur Verfügung zu stellen. Über den Informationsweg w hat die Wegesucheinrichtung W Zugriff auf die Kanäle des Bündels K. In einem Speicher v werden die Adressen der jeweils momentan freien Kanäle gespeichert. Ebenso gut ist es auch möglich, für jeden der Kanäle einen freien Speicherplatz verfügbar zu haben und pro Speicherplatz mit Hilfe einer einfachen Information zu speichern, ob der jeweilige Kanal momentan frei ist oder belegt. Wird ein Kanal neu belegt im Zuge der Herstellung einer gewünschten Verbindung, so wird die Speicherung des Freizustandes des betreffenden Kanals in eine Speicherung des Belegtzustandes in an sich bekannter Weise umgewandelt. Entsprechendes gilt umgekehrt für den Fall, daß ein Kanal, der belegt gewesen ist, frei wird.

Außer Einkanalverbindungen können auch Mehrkanalverbindungen hergestellt werden. Für die Herstellung einer Mehrkanalverbindung ist in jedem Verbindungsabschnitt eine entsprechende Mehrzahl von zugleich freien Kanälen erforderlich. Diese Zahl von für die Herstellung einer Mehrkanalverbindung erforderlichen Kanälen pro Verbindungsabschnitt möge vier betragen. Die Wegesucheinrichtung W ist mit einem Speicher z ausgestattet, in dem diese Zahl gespeichert ist.

Bei jeder Verbindungsherstellung wird die Wegesucheinrichtung W in Anspruch genommen. In ihrem Speicher v ist jederzeit gespeichert, wie viele Kanäle des Bündels K frei sind und welche Kanäle das sind. Vor einer Suche und Auswahl eines freien Kanales für eine Einkanalverbindung bzw. von entsprechend mehreren, das heißt vier Kanälen für eine Mehrkanalverbindung prüft die Wegesucheinrichtung W anhand der in ihrem Speicher z gespeicherten Zahl, ob die Anzahl der momentan freien Kanäle gleich groß oder größer ist als diese Zahl. Trifft dies zu, so nimmt die Wegesucheinrichtung W eine Suche und Auswahl eines freien Kanales bzw. der mehreren freien Kanäle vor. Ist die Anzahl der momentan freien Kanäle jedoch kleiner, so ist die Wegesucheinrichtung dadurch gehindert, einen Such- und Auswahlvorgang vorzunehmen. Dies gilt also auch für den Fall, daß eine Einkanalverbindung herzustellen ist. Dadurch wird in der weiter oben angegebenen Weise erreicht, daß Mehrkanalverbindungen die gleiche Verbindungsherstellungs-Chance gegeben ist, wie Einkanalverbindungen. Erst wenn die Anzahl von frei gewordenen Kanälen wieder den Wert vier erreicht, also die Anzahl von Kanälen, die zur Herstellung einer Mehrkanalverbindung erforderlich sind, werden diese Kanäle für die Wegesucheinrichtung auch zur Suche und Auswahl eines freien Kanales für eine Einkanalverbindung wieder verfügbar.

Die bereits erwähnte Ausführungsvariante der Erfindung sieht vor, daß bei der Herstellung einer Einkanalverbindung die Kanäle eines Bündels für die Sucheinrichtung auch zur Auswahl stehen, wenn nur ein einziger Kanal des betreffenden Bündels frei ist, und daß für den Fall, daß die Anzahl der momentan freien Kanäle so groß wie die bestimmte Mehrzahl von Kanälen für eine Mehrkanalverbindung ist, die Herstellung einer Mehrkanalverbindung Vorrang vor der Herstellung einer Einkanalverbindung hat, insbesondere die freien Kanäle nur zur Herstellung einer Mehrkanalverbindung für die Sucheinrichtung zur Auswahl stehen. Hierdurch wird also die Verbindungsherstellungs-Chance für Einkanalverbindungen in einer Betriebssituation erhöht, in der für Mehrkanalverbindungen ohnehin eine relativ nur geringe Erfolgs-Chance besteht. Ist dagegen die Anzahl der in einem Bündel freien Kanäle bereits auf zwei oder drei angestiegen, so ist damit die Erfolgs-Chance für die Herstellung einer Mehrkanalverbindung ganz erheblich höher als in der Betriebssituation, in der nur ein einziger Kanal frei ist. Sind zwei oder drei Kanäle des betreffenden Bündels frei, so kann keiner dieser Kanäle für die Herstellung einer Einkanalverbindung verwendet werden. Sind vier Kanäle des betreffenden Bündels frei, so kann bereits eine Mehrkanalverbindung hergestellt werden. Der durch diese Ausführungsvariante sich ergebende Vorteil zugunsten der Einkanalverbindungen in der Betriebssituation, daß nur ein einziger Kanal des betreffenden Bündels frei ist, wird dadurch aufgewogen, daß bei Freizustand von vier Kanälen eine Herstellung von Mehrkanalverbindungen gegenüber einer Herstellung von Einkanalverbindungen in der Wegesucheinrichtung bevorzugt ist. Stehen also gleichzeitig zwei Verbindungsherstellungsaufträge an, von denen der eine eine Einkanalverbindung und der andere eine Mehrkanalverbindung betrifft, so erhält der Verbindungsherstellungsauftrag für die Mehrkanalverbindung den Vorzug. Dies kann in einfacher Weise dadurch bewerkstelligt werden, daß auch bei vier freien Kanälen pro Kanalbündel die Herstellung einer Einkanalverbindung in der Wegesucheinrichtung verhindert ist, während die Herstellung einer Mehrkanalverbindung möglich ist. Die Herstellung einer Einkanalverbindung wäre dann erst möglich, wenn insgesamt fünf Kanäle in dem betreffenden Bündel frei sind. Abgesehen davon, daß — wie oben angegeben — eine Einkanalverbindung auch hergestellt werden kann, wenn ein einziger Kanal des betreffenden Bündels frei ist.

Es besteht darüber hinaus die Möglichkeit, die Wegesucheinrichtung so auszubilden, daß sie hinsichtlich der Reihenfolge der Kanäle mit zweierlei Absuchreihenfolge arbeitet, und zwar einer ersten Absuchreihenfolge, die angewendet wird, wenn es sich um die Herstellung einer Einkanalverbindung handelt und einer zweiten Absuchreihenfolge, die angewendet wird, wenn es sich um die Herstellung einer Mehrkanalverbindung handelt.

## Patentanspruch

Schaltungsanordnung für Fernmeldevermittlungsanlagen, insbesondere Fernsprechvermittlungsanlagen, in denen Verbindungen zwischen zwei Endstellen, zum Beispeil Teilnehmerstellen, als Einkanalverbindungen über je einen Kanal für jede der beiden Übertragungsrichtungen oder als Mehrkanalverbindungen über dementsprechend eine bestimmte Mehrzahl von Kanälen pro Mehrkanalverbindung für jede der beiden Übertragungsrichtungen hergestellt werden, und in denen zur Verbindungsherstellung Bündel von Kanälen in Koppelfeldern jeweils von Koppelstufe zu Koppelstufe verlaufend und gegebenenfalls auch in Übertragungssystemen jeweils von Vermittlungsstelle zu Vermittlungsstelle verlaufend zur freien Auswahl je eines freien Kanales oder — bei Mehrkanalverbindungen von dementsprechend mehreren zugleich auszuwählenden Kanälen — für Wegeauswahl-Sucheinrichtungen in oder von Koppelfeldern und gegebenenfalls Richtungsauswahl-Sucheinrichtungen in Vermittlungsstellen zur Verfügung stehen, und in denen die freien Kanäle jeweils eines Bündels für eine Suche nach und eine Auswahl von einem Kanal für eine Einkanalverbindung für jede ihrer beiden Übertragungsrichtungen nur verfügbar sind, wenn die Anzahl der momentanen freien Kanäle wenigstens so groß wie die bestimmte Mehrzahl von Kanälen für eine Mehrkanalverbindung ist, dadurch gekennzeichnet, daß Mittel decant vorgesehin sind, daß bei der Herstellung einer Einkanalverbindung die Kanäle eines Bündels für die Sucheinrichtung auch zur Auswahl stehen, wenn nur ein einziger Kanal des betreffenden Bündels frei ist, und daß für den Fall, daß die Anzahl der momentan freien Kanäle so groß wie die bestimmte Mehrzahl von Kanälen für eine Mehrkanalverbindung ist, die Herstellung einer Mehrkanalverbindung Vorrang vor der Herstellung einer Einkanalverbindung hat, insbesondere die freien Kanäle nur zur Herstellung einer Mehrkanalverbindung für die Sucheinrichtung zur Auswahl stehen.

## Revendication

Montage pour des installations de télécommunications, notamment des installations de commutation téléphonique, dans lesquelles des liaisons sont établies entre deux postes terminaux, par exemple des postes d'abonnés, sous la forme de liaisons à canal unique par l'intermédiaire d'un canal respectif pour chacun des deux sens de transmission ou sous la forme de liaisons à canaux multiples par l'intermédiaire d'un nombre déterminé correspondant de canaux pour chaque liaison à canaux multiples pour chacun des deux sens de transmission, et dans lesquelles pour l'établissement des liaisons, des faisceaux de canaux traversant des champs de couplage, respectivement d'un étage de couplage au suivant, et traversant également des systèmes de transmission, respectivement d'un central au suivant, pour la sélection libre respectivement d'un canal libre ou -dans le cas de liaisons à canaux multiples d'un nombre correspondant de canaux devant être sélectionnés simultanément, sont à la disposition de dispositifs de sélection et de recherche de voies d'acheminement dans ou de champs de couplage, et éventuellement de dispositifs de sélection et de recherche de directions dans des centraux, et dans lesquelles les canaux libres d'un faisceau respectif sont disponibles pour une recherche et une sélection d'un canal pour une liaison à canal unique pour chacun des deux sens de transmission, uniquement lorsque le nombre des canaux libres instantanément est égal au moins au nombre déterminé de canaux pour une liaison à canaux multiples, caractérisé en ce qu'il est prévu des moyens tels que, lors de l'établissement d'une liaison à canal unique, les canaux d'un faisceau pour le dispositif de recherche sont également disponibles pour la sélection lorsque seulement un canal unique du faisceau considéré est libre, et que dans le cas où le nombre des canaux libres instantanément est égal au nombre prédéterminé de canaux pour une liaison à canaux multiples, l'établissement d'une liaison à canaux multiples a priorité sur l'établissement d'une liaison à canal unique, et notamment les canaux libres sont à la disposition du dispositif de recherche pour la sélection, uniquement pour l'établissement d'une liaison à canaux multiples.

## Claim

Circuit arrangement for telecommunication exchanges, preferably telephone exchanges, in which connections are established between two terminal stations, for example subscriber stations, as single-channel connections via one channel each for each of the two directions of transmission or as multi-channel connections via correspondingly a particular plurality of channels per multichannel connection for each of the two directions of transmission, and in which, for the purpose of establishing the connection, groups of channels are available in switching networks, extending in each case from switching stage to switching stage and, if necessary, also extending in transmission systems in each case from exchange to exchange, for the free selection of one free channel each or — in the case of multi-channel connections of correspondingly several channels to be selected at the same time — by path selection search devices in or of switching networks and, if necessary, route selection search devices in exchanges, and in which the free channels of in each case one group are only available for a search for and a selection of a channel for a singlechannel connection for each of its two directions of transmission when the number of instantaneously free channels is at least as large as the particular plurality of channels for amulti-channel connection, characterized in that means are provided in such a manner that during the establishment of a single-channel connection, the channels of a group are also available for selection by the search device if only a single channel of the relevant group is free, and in that, in the case where the number of instantaneously free channels is as large as the particular plurality of channels for a multichannel connection, the establishment of a multi-channel connection has priority over the establishment of a single-channel connection, preferably the free channels are only available for selection by the search device for the establishment of a multi-channel connection.